# FASCICULE DE BREVET EUROPEEN

(11) **EP 2 271 544 B1**
(45) Date de publication et mention de la délivrance du brevet: **25.07.2012**
(21) Numéro de dépôt: 09728024.2
(22) Date de dépôt: 02.04.2009
(51) Int. Cl.: B62K 25/28, B62K 25/08

(54) **SYSTEME DE SUSPENSION POUR BICYCLETTE**
FAHRRADAUFHÄNGUNGSSYSTEM
BICYCLE SUSPENSION SYSTEM

(30) Priorité: 02.04.2008 FR 0852161
(43) Date de publication de la demande: 12.01.2011
(73) Titulaire: Cycles Lapierre, 21000 Dijon (FR)
(72) Inventeur: PLANTET, Pierre-Geoffroy, 83607 Holzkirchen (DE); ANTONOT, Emmanuel, 88700 saint Gorgon (FR); GRIBAUDO, Rémy, F-21000 Dijon (FR)
(74) Mandataire: Dupuis, François
(86) Numéro de dépôt international: PCT/EP2009/053966
(87) Numéro de publication internationale: WO 2009/121936

(56) Documents cités:
- EP-A- 1 241 087
- EP-A2- 2 103 512
- DE-A1-102005 025 811
- US-A1- 2001 030 408

## Description

La présente invention concerne un système de suspension d'une bicyclette comportant au moins un amortisseur, du type comportant au moins un capteur et une unité de contrôle pilotant l'amortisseur avant et/ou arrière de la bicyclette en fonction du signal transmis par ledit capteur.

On connaît bien des vélos tout terrain dits VTT comportant une suspension arrière constituée d'un bras oscillant articulé au niveau de la partie inférieure du tube de selle coopérant avec un amortisseur dit arrière. Ledit bras oscillant pivote autour d'un axe fixe parallèle à l'axe des pignons menants qui est porté par le boitier de pédalier positionné à l'extrémité inférieure du cadre, c'est-à-dire à l'intersection du tube oblique et du tube de selle de ce dernier.

Par ailleurs, les extrémités de l'amortisseur sont solidaires du bras oscillant et respectivement du tube horizontal reliant le tube de selle à la fourche du vélo ou d'un tube intermédiaire s'étendant globalement du boitier de pédalier au tube horizontal, ledit tube de selle étant interrompu pour laisser le passage à l'amortisseur.

Ce type de suspension arrière provoque sous l'action d'un coup de pédale énergique tel qu'un coup de pédale pour relancer le vélo ou lorsque le cycliste adopte la position dite en danseuse debout sur les pédales, un effet dit de pompage qui se traduit par un enfoncement cyclique de la suspension même sur un sol parfaitement nivelé. Ce type de suspension arrière présente donc l'inconvénient de dissiper une partie du couple moteur fourni par le cycliste dans l'amortisseur au lieu de participer à l'avancement du vélo.

On connaît également des vélos tout terrain dits VTT dont la suspension arrière est constituée d'un bras oscillant articulé au tube de selle et/ou au tube oblique du cadran au moyen de deux biellettes ou similaire, ledit bras oscillant ou au moins l'une des biellettes coopérant avec un amortisseur. Ledit bras oscillant pivote autour d'un point de pivot virtuel mobile, également appelé centre instantané de rotation, qui correspond à l'intersection des droites passant par les axes respectifs des biellettes.

C'est le cas notamment de la demande de brevet américain US 2002/0109332, par exemple, qui décrit une telle suspension arrière de vélo. Le centre instantané se déplace dans le quadrant antérieur inférieur et se déplace d'avant en arrière et de haut en bas lorsque le bras oscillant se déplace vers le haut lors du franchissement d'un obstacle tel qu'une bosse par exemple

Une telle suspension arrière à centre instantané de rotation, également appelé point de pivot virtuel présente l'inconvénient de procurer un effet dit de pompage.

Afin de remédier à cet inconvénient, on a déjà imaginé une suspension arrière d'un véhicule ne procurant pas d'effet de pompage. C'est le cas notamment de la demande de brevet français FR 2 898 577 déposée par la demanderesse qui décrit une suspension arrière comportant un bras arrière oscillant portant le moyeu de la roue arrière et articulé par au moins deux moyens d'articulation à un cadre portant un boitier de pédalier. Le centre instantané de rotation se situe à proximité du brin tendu supérieur de la chaîne en position d'équilibre statique et se déplace à l'intérieur d'une bande horizontale de telle manière que ledit centre instantané se déplace horizontalement lorsque le bras oscillant se déplace vers le haut lors du franchissement d'un obstacle. Cette trajectoire du centre instantané de rotation procure un effet anti-pompage en créant un moment de rappel tendant à ramener le bras oscillant dans sa position d'équilibre statique lors du pédalage.

Toutefois, quel que soit le type de suspension arrière, c'est-à-dire un bras pivotant autour d'un point fixe ou pivotant au tour d'un point de pivot virtuel mobile, les amortisseurs conventionnels présentent plusieurs inconvénients. Un premier inconvénient est que les amortisseurs conventionnels sont configurés avec une loi d'amortissement dans laquelle la vitesse d'enfoncement est généralement fixe. La plupart des amortisseurs conventionnels comportent deux positions, une position ouverte dans laquelle la vitesse d'enfoncement est maximale et une position fermée dans laquelle la vitesse d'enfoncement est nulle, c'est-à-dire que l'amortisseur se comporte comme une pièce rigide. Ces différentes positions permettent d'adapter les propriétés de l'amortisseur en fonction de la nature du terrain.

Par ailleurs, les amortisseurs conventionnels ne sont pas capables de différencier les mouvements de la roue dus au passage d'un obstacle avec les mouvements causés par les transferts de masse du cycliste sur le cadre du vélo.

Afin de remédier à ces inconvénients, on a déjà imaginé des systèmes de suspension comportant au moins un capteur connecté à une unité de contrôle et pilotant l'amortisseur arrière, et éventuellement l'amortisseur avant de la fourche avant, en fonction du signal transmis par ledit capteur, ledit capteur mesurant généralement une accélération pour détecter la rencontre d'une roue avec un obstacle.

C'est le cas notamment de la demande de brevet européen EP 1 241 087 qui est considéré comme représentant l'état de la technique le plus pertinent, du brevet américain US 6,149,174, DE 10 2005 025811, US 2001/030408 ou bien encore de la demande de brevet international WO 99/06231. Le document EP2103512A2 est considéré comme compris dans l'état de la technique concernant l'art, 54(3) LBE.

Tous ces systèmes de suspension arrière pilotés par l'unité de contrôle présentent néanmoins l'inconvénient de ne pas piloter les propriétés de l'amortisseur en fonction notamment du pédalage du cycliste.

L'un des buts de l'invention est donc de remédier à ces inconvénients en proposant un système de suspension d'une bicyclette du type comportant au moins un amortisseur arrière et/ou avant de conception simple, peu onéreuse, permettant d'adapter les propriétés de l'amortisseur en fonction du pédalage du cycliste.

A cet effet, et conformément à l'invention, il est proposé un système de suspension d'une bicyclette du type comportant un châssis dit cadre, d'une fourche avant portant l'axe du moyeu d'une roue avant directrice et comportant un premier amortisseur dit amortisseur avant, d'un bras oscillant articulé au cadre, portant l'axe du moyeu d'une roue arrière motrice et un amortisseur dont les extrémités sont solidaires respectivement du cadre et du bras oscillant, le couple moteur étant transmis à la roue motrice par une chaîne s'étendant entre un pignon menant solidaire du cadre et un pignon mené solidaire de l'axe du moyeu de la roue motrice, et d'au moins un capteur dit de choc apte à déterminer le franchissement d'un obstacle par la roue directrice et/ou motrice, ledit capteur étant connecté à une unité de contrôle pilotant l'amortisseur avant et/ou arrière en fonction du signal transmis par ledit capteur ; ledit système est remarquable en ce que l'amortisseur avant et/ou arrière est un amortisseur à compression variable comportant au moins trois positions, une position ouverte dans laquelle la compression est maximale, une position fermée dans laquelle la compression est nulle et une position dite médium, et en ce qu'il comporte au moins des moyens de détection de pédalage dits capteurs de pédalage connectés à l'unité de contrôle qui, lorsqu'aucun pédalage n'est détecté par le capteur de pédalage, règle la commande de compression de l'amortisseur dans la position ouverte et, lorsqu'un pédalage est détecté par le capteur de pédalage, règle la commande de compression de l'amortisseur dans l'une de ses trois positions, ouverte, fermée ou médium, en fonction du signal de détection des chocs.

Ladite unité de contrôle règle la commande de compression de l'amortisseur dans la position fermée lorsque d'une part un pédalage est détecté par le capteur de pédalage et d'autre part aucun choc n'est détecté.

Par ailleurs, l'unité de contrôle règle la commande de compression de l'amortisseur dans une position intermédiaire lorsque d'une part un pédalage est détecté par le capteur de pédalage et d'autre part un choc est détecté par le capteur de choc.

De plus, l'unité de contrôle règle la commande de compression de l'amortisseur dans sa position ouverte lorsque, d'une part, un pédalage est détecté par le capteur de pédalage et, d'autre part, un choc de grande intensité est détecté par le capteur de choc.

Accessoirement, le système suivant l'invention comporte des moyens de détermination de l'énergie du choc détecté.

De manière avantageuse, l'unité de contrôle règle alors la vitesse d'enfoncement de l'amortisseur en fonction du niveau d'énergie du choc détecté par le capteur.

Lesdits moyens de détection de pédalage consistent en au moins une ampoule « reed » solidaire du cadre et en au moins un aimant permanent solidaire d'au moins une manivelle.

Selon une variante d'exécution, lesdits moyens de détection du pédalage consistent en au moins un capteur magnéto inductif solidaire du cadre et en au moins un aimant permanent solidaire d'au moins une manivelle.

Selon une autre variante d'exécution, lesdits moyens de détection du pédalage consistent en des moyens de mesure de la puissance de pédalage connectés à l'unité de contrôle qui règle la commande de compression en fonction de la puissance mesurée.

De manière avantageuse, le système suivant l'invention comporte, par ailleurs, des moyens de mesure de l'inclinaison de ladite bicyclette connectés à l'unité de contrôle qui règle la commande de compression en fonction de l'inclinaison mesurée.

D'autres avantages et caractéristiques ressortiront mieux de la description qui va suivre, de plusieurs variantes d'exécution, données à titre d'exemples non limitatifs, du système de suspension d'une bicyclette suivant l'invention, à partir des dessins annexés sur lesquels:
- La figure 1 est une vue de côté partielle d'une bicyclette équipée du système de suspension conforme à l'invention,
- La figure 2 est une représentation schématique du diagramme illustrant le système de suspension suivant l'invention,
- La figure 3 est une table de vérité de l'algorithme de l'unité de contrôle du système de suspension suivant l'invention,
- La figure 4 est une table de vérité d'une variante d'exécution de l'algorithme de

l'unité de contrôle du système de suspension conforme à l'invention,
- La figure 5 est une table de vérité d'une seconde variante d'exécution de l'algorithme de l'unité de contrôle du système de suspension suivant l'invention,
- La figure 6 est une table de vérité d'une dernière variante d'exécution de l'algorithme de l'unité de contrôle du système de suspension conforme à l'invention.

On décrira ci-après le système de suspension suivant l'invention pour un vélo tout terrain, dit VTT, à point de pivot virtuel ; toutefois il est bien évident que le système de suspension pourrait être utilisé pour tout type de vélo comportant une suspension arrière, tel qu'un VTT à point de pivot fixe, et éventuellement une suspension avant, sans pour autant sortir du cadre de l'invention.

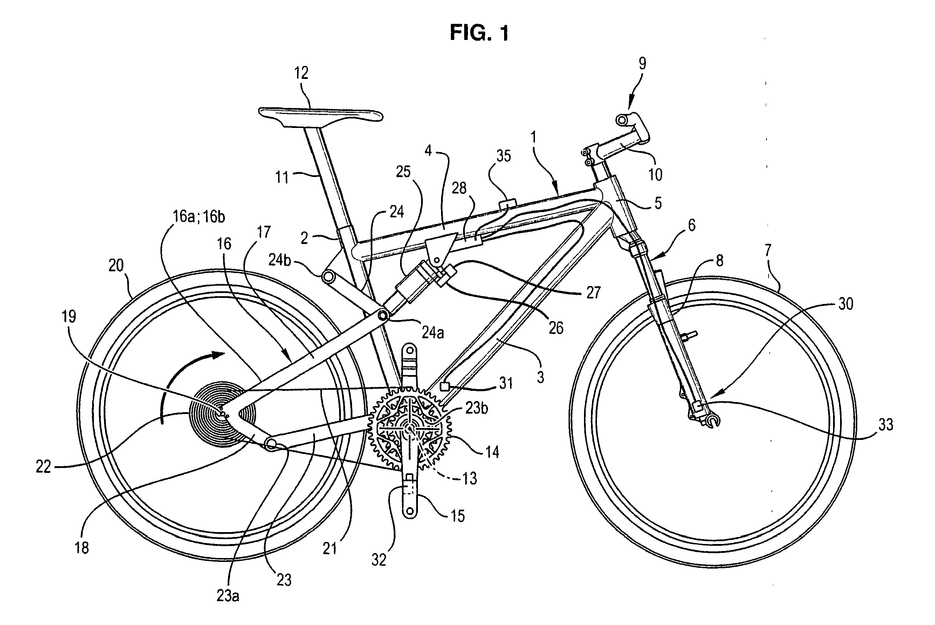

En référence à la figure 1, le VTT comprend un châssis 1 dit cadre triangulé constitué d'un tube de selle 2 globalement vertical, d'un tube oblique 3 assemblé par soudage à l'extrémité inférieure du tube de selle 2 et d'un tube horizontal 4 dont les extrémités sont assemblées par soudage à l'extrémité supérieure du tube de selle 2 et respectivement d'un tube de fourche 5 globalement vertical, le tube oblique 3 étant, par ailleurs, solidarisé audit tube de fourche 5 également par soudage. Ce tube de fourche 5 reçoit une fourche 6 du type télescopique portant à son extrémité inférieure l'axe du moyeu de la roue avant 7 du VTT. La fourche télescopique 6 comporte de manière usuelle un amortisseur dit avant 8. Un guidon 9 est de manière classique solidarisé à l'extrémité distale d'une potence 10 solidaire de l'extrémité supérieure de la fourche 6 pour assurer la direction du VTT.

Il va de soi que le cadre 1 pourra présenter une forme quelconque telle qu'une forme de V couché ou une forme de L couché par exemple sans pour autant sortir du cadre de l'invention.

Le tube de selle 2 est apte à recevoir une tige de selle 11 comprenant à son extrémité supérieure une selle 12 sur laquelle prend position le cycliste.

Il va de soi que les différents tubes, tube de selle 2, tube oblique 3, tube horizontal 4, et tube de fourche 5, du cadre 1, peuvent être assemblés par tous moyens appropriés bien connus par l'homme du métier tel que par collage et/ou par emboîtement par exemple.

L'extrémité inférieure dudit tube de selle 2, c'est-à-dire l'intersection du tube oblique 3 et du tube de selle 2, comporte un boitier de pédalier 13 portant de manière classique l'axe des pignons menants 14 communément appelés plateaux dont les axes de rotation sont coaxiaux, des pédales 15 étant solidaires de l'axe des pignons menants 14 de part et d'autre du cadre 1 du VTT.

Ledit VTT comporte, par ailleurs, un bras oscillant 16 constitué de deux ensembles 16a, 16b, en forme de V s'étendant de part et d'autre du plan médian du cadre 1. Lesdits ensembles 16a, 16b, sont reliés par une ou plusieurs entretoises non représentées sur la figure 1. Chaque ensemble 16a, 16b du bras oscillant 16 est constitué d'un tube oblique 17 dit hauban et d'un tube inférieur 18 connecté deux à deux par des soudures. L'intersection du hauban 17 et du tube inférieur 18 porte l'axe du moyeu 19 de la roue arrière 20.

De manière classique ladite roue arrière 20 est entraînée en rotation par une chaîne de transmission 21 s'étendant entre les pignons menants 14 du boitier de pédalier 13 et des pignons menés 22 portés par l'axe du moyeu 19 de la roue arrière 20 motrice, lorsque le cycliste pédale.

Il va de soi que le bras oscillant 16 peut présenter une forme quelconque telle qu'une forme triangulaire ou globalement rectiligne sans sortir du cadre de l'invention.

Par ailleurs, ledit bras oscillant 16 est solidarisé au cadre 1 par deux moyens d'articulation 23 et 24.

Le premier moyen d'articulation 23 consiste en une biellette dite inférieure 23 dont les axes de rotation 23a et 23b positionnés aux extrémités libres de ladite biellette 23 sont respectivement articulés à l'extrémité libre du tube inférieur 18 du bras oscillant 16 au tube de selle 2 à proximité du boitier de pédalier 13.

Le second moyen d'articulation 24 consiste en une biellette dite supérieure 24 dont les axes de rotation 24a, 24b positionnées aux extrémités de ladite biellette supérieurs sont respectivement articulées à l'extrémité libre antérieure du hauban 17 du bras oscillant 16 et au tube de selle 2, en dessous du tube horizontal 3 du cadre 1.

Il va de soi que les moyens d'articulation 23, 24 pourront être substitués par d'autres moyens d'articulation équivalents tels qu'un excentrique, une lame flexible ou similaires, sans pour autant sortir du cadre de l'invention.

Le VTT comprend également un amortisseur dit arrière 25 dont les extrémités libres sont solidaires respectivement du tube horizontal 3 et de l'extrémité libre antérieure du hauban 17 du bras oscillant 16 ou de la biellette supérieure 24.

On notera que, en fonction de l'architecture du cadre 1 et du bras oscillant 16, les extrémités de l'amortisseur arrière 25 pourront être solidaires d'une biellette de report et respectivement à l'un quelconque des tubes du cadre 1.

Ledit amortisseur arrière 25 consiste en un amortisseur à compression variable comportant au moins trois positions, une position ouverte dans laquelle la compression est maximale, une position fermée dans laquelle la compression est nulle, et une position dite médium.

Ce type d'amortisseur 25 à compression variable comporte une valve 26 de compression telle que décrite dans la demande américaine US 6 135 434 par exemple. Le système de suspension suivant l'invention comporte, par ailleurs, des moyens d'actionnement 27 de la valve de compression 26 consistant, par exemple, en un servomoteur piloté par une unité de contrôle 28. Cette unité de contrôle 28 comporte un algorithme qui détermine la commande de compression de l'amortisseur arrière 25 et/ou avant 8 en fonction d'un signal de présence de pédalage et éventuellement d'un signal de détection des chocs, lesdits signaux étant déterminés par des moyens de détection de la présence de pédalage 29 et éventuellement des moyens de détection des chocs 30.

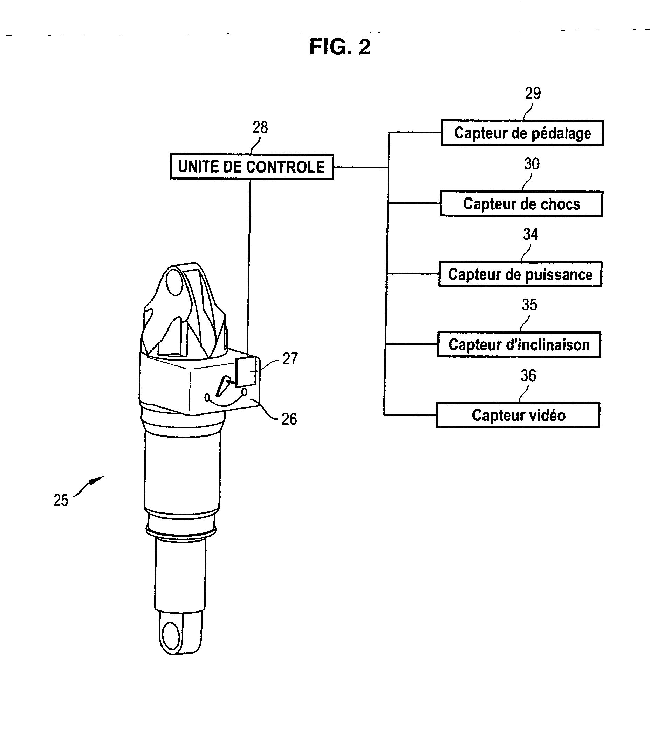

Ces moyens de détection du pédalage 29 consistent, en référence aux figures 1 et 2, en une ampoule reed 31 solidaire du cadre 1, plus précisément solidaire du tube de selle 2 ou du tube oblique 3 à proximité du boitier de pédalier 13, et au moins un aimant permanent 32 solidaire de l'une ou des deux manivelles 15. Ce type de détecteur de la présence du pédalage présente une bonne sensibilité d'environ 2 mT et une surcharge magnétique suffisamment faible. De plus ce type de détecteur est particulièrement peu onéreux.

Selon une variante d'exécution du système de suspension conforme à l'invention, le détecteur de la présence du pédalage à ampoule Reed peut avantageusement être substitué par un détecteur magnéto-inductif 31 consistant dans un capteur magnéto-inductif solidaire du cadre 1, à proximité du boitier de pédalier 13, et un aimant permanent 32 solidaire de l'une des manivelles. Ce type de détecteur présente l'avantage de présenter une résistance aux vibrations meilleures que les détecteurs de type à ampoule reed.

Les moyens de détection des chocs 30 consistent, par exemple, en au moins un accéléromètre 33 solidaire de l'extrémité libre inférieure de la fourche 6.

Selon une autre variante d'exécution du système de suspension suivant l'invention, les moyens de détection des chocs 30 peuvent consister dans un micro rupteur muni d'une languette à proximité de laquelle est solidarisée une masse. Cette masse est étalonnée de telle sorte qu'elle fasse fermer le contact pour une intensité de choc minimale déterminée. De manière avantageuse, les moyens de détection peuvent consister dans deux ou trois rupteurs respectivement munis d'une languette à l'extrémité de laquelle est solidaire une masse différente. Ainsi un premier micro rupteur permettra de détecter les faibles chocs et le second micro rupteur de détecter les gros chocs.

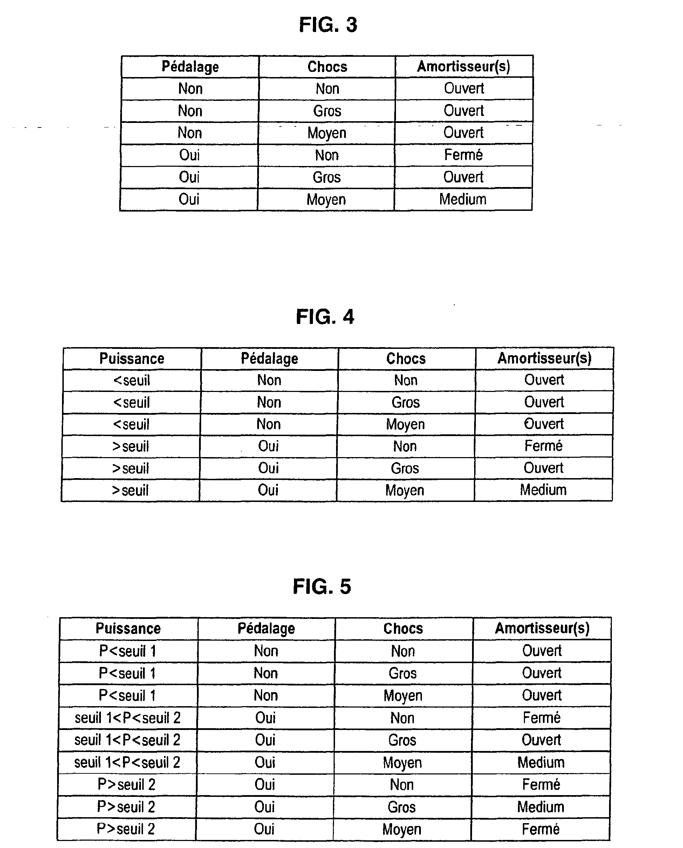

Ainsi, en référence à la figure 3, l'algorithme de l'unité de contrôle détermine la position ouverte, fermée ou médium de l'amortisseur en fonction des signaux de présence du pédalage et de détection des chocs.

Lorsqu'aucun pédalage n'est détecté, l'unité de contrôle 28 pilote l'amortisseur 25 en position ouverte que des chocs faibles, gros ou aucun choc n'aient été détectés par les moyens de détection des chocs 30. Lorsqu'un pédalage est détecté et qu'aucun choc n'est détecté l'unité de contrôle 28 pilote l'amortisseur 25 en position fermée empêchant ainsi toute compression de l'amortisseur 25 et évitant l'apparition du phénomène de pompage dû au pédalage. Lorsqu'un pédalage est détecté et qu'un gros choc est détecté l'unité de contrôle 28 pilote l'amortisseur 25 en position ouverte afin de permettre une absorption maximale du choc par ledit amortisseur 25.

Enfin lorsqu'un pédalage est détecté et qu'un choc d'une intensité moyenne a été détecté, l'unité de contrôle 28 pilote l'amortisseur 25 dans sa position médium.

On observera que l'intensité d'un choc est proportionnelle à l'accélération mesurée. De plus, un choc d'intensité moyenne et un choc d'intensité élevée correspondent à des valeurs d'accélération qu'un homme du métier pourra aisément déterminer en fonction de l'utilisation du VTT notamment.

Selon une autre variante d'exécution du système de suspension conforme à l'invention, en référence à la figure 2, les moyens de détection du pédalage précédemment décrit peuvent être substitués ou complétés par des moyens de détection de la puissance 34 développée par le cycliste lors du pédalage. Ces moyens de détection de la puissance 34 peuvent consistés par exemple en un capteur de puissance tel que commercialisé par la société POLAR® par exemple. Ledit moyen de détection de la puissance 34 est connecté à l'unité de contrôle 28 qui reçoit un signal proportionnel à la puissance mesurée.

En référence à la figure 4, l'algorithme de l'unité de contrôle 28 détermine alors si le signal reçu est inférieur ou supérieur à une valeur seuil afin de déterminer la présence ou non de pédalage. Par exemple, si la puissance mesurée par les moyens de mesure de la puissance est inférieure à un seuil de 100 watts par exemple, l'unité de contrôle 28 détermine qu'il n'y a pas de pédalage. A contrario, si la puissance mesurée est supérieure au seuil de 100 watts, l'unité de contrôle 28 détermine qu'il y a un pédalage. Alors, de la même manière que précédemment lorsqu'aucun pédalage n'est détecté l'unité de contrôle 28 pilote l'amortisseur en position ouverte qu'un choc ait été détecté ou non. De plus, lorsqu'un pédalage est détecté, l'amortisseur 25 est piloté en position ouverte lorsqu'un grand choc est détecté, en position fermée lorsqu'aucun choc n'est détecté et en position médium lorsqu'un choc d'intensité moyenne a été détecté.

De manière avantageuse, en référence à la figure 5, l'unité de contrôle 28 peut comparer la valeur de la puissance mesurée par rapport à deux seuils, un premier seuil de 100 watts et un second seuil de 200 watts par exemple. L'unité de contrôle 28 détermine alors une absence de pédalage, si la puissance mesurée est inférieure au premier seuil de 100 watts. Lorsqu'aucun pédalage n'est détecté, l'unité de contrôle 28 pilote de la même manière que précédemment l'amortisseur 25 en position ouverte que des chocs aient été détectés ou non. Lorsque la valeur de la puissance mesurée est comprise entre le premier seuil de 100 watts et le second seuil de 200 watts, l'unité de contrôle 28 détermine la présence d'un pédalage et pilote l'amortisseur 25 en position fermée lorsqu'aucun choc est détecté, en position ouverte lorsqu'un gros choc est détecté et en position médium lorsqu'un choc d'intensité moyenne a été détecté. Enfin, lorsque la puissance mesurée est supérieure à la valeur du deuxième seuil de 200 watts, l'unité de contrôle 28 pilote l'amortisseur 25 en position fermée lorsqu'aucun choc est détecté, en position médium lorsqu'un gros choc est détecté et en position fermée lorsqu'un choc d'intensité moyenne est détecté.

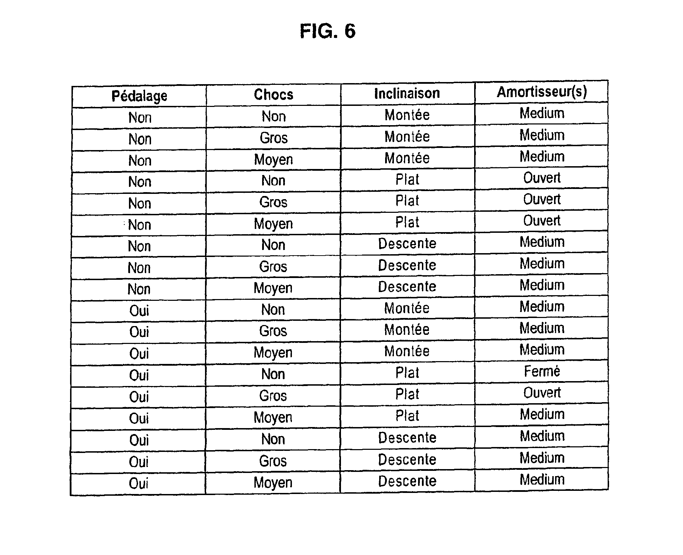

Selon une autre variante d'exécution, le système de suspension conforme à l'invention, en référence aux figures 1 et 2, peut également avantageusement comprendre au moins un capteur 35 mesurant l'inclinaison du vélo, ledit capteur 35 étant connecté à l'unité de contrôle 28. L'unité de contrôle 28 pilote alors l'amortisseur 25 en fonction du signal de présence de pédalage, du signal de détection des chocs et du signal correspondant à l'inclinaison du vélo. Un exemple de table de vérité de l'algorithme de l'unité de contrôle 28 est représenté sur la figure 6.

Par ailleurs, le système de suspension, conforme à l'invention, peut également comprendre des moyens de détermination de la fréquence des chocs de telle manière que l'unité de contrôle 28 pilote alors l'amortisseur en fonction du signal de présence du pédalage, du signal de détection des chocs (intensité des chocs) et du signal de la fréquence des chocs.

Accessoirement, en référence à la figure 2, le système de suspension suivant l'invention peut comporter un capteur vidéo 36, tel qu'un capteur CMOS connecté à l'unité de contrôle 28 qui comporte un algorithme de traitement des images transmises par le capteur vidéo 36 de manière à déterminer la présence ou l'absence d'un obstacle avant que la roue directrice 7 ne rencontre ledit obstacle. De manière avantageuse, l'algorithme pourra également déterminer préalablement au choc, l'intensité du choc de telle manière que ladite unité de contrôle 28 puisse piloter l'amortisseur 25 en conséquence tel que décrit précédemment par exemple.

De plus, le système de suspension suivant l'invention pourra comporter des moyens de détection de débattement de la fourche avant, non représenté sur les figures, connecté à l'unité de contrôle 28, qui pilote en fonction du débattement mesuré et de la vitesse de déplacement du vélo, ladite vitesse étant mesurée par un capteur de vitesse bien connu de l'homme du métier, la commande de compression de l'amortisseur 25 arrière et/ou avant 6.

Il est bien évident que, pour des raisons de simplification, les différents capteurs 30 du système suivant l'invention sont connectés à l'unité de contrôle 28 par des moyens filaires ; toutefois, il va de soi que les différents capteurs pourront transmettre leurs signaux respectifs à l'unité de contrôle 28 par tous moyens de transmission sans fil bien connus de l'homme du métier tels que, par exemple, des connections bluetooth ou similaire, sans pour autant sortir du cadre de l'invention.

De plus, il est bien évident que l'amortisseur avant 25 et/ou arrière 6 consiste en un amortisseur hydraulique qui pourrait être substitué par tout type d'amortisseur à compression variable, tel qu'un amortisseur électro magnétique par exemple.

Enfin, il va de soi que le système de suspension conforme à l'invention pourra être adapté à tous les types de véhicules comportant un châssis, un bras oscillant portant l'axe du moyeu d'au moins une roue motrice, articulé au châssis autour d'un point fixe ou autour d'un point de pivot virtuel, et un amortisseur dont les extrémités sont solidaires respectivement du châssis et du bras oscillant et que les exemples que l'on vient de donner ne sont que des illustrations particulières en aucun cas limitatives quant aux domaines d'application de l'invention.

## Revendications

1. Système de suspension d'une bicyclette du type comportant un châssis dit cadre (1), d'une fourche avant (6) portant l'axe du moyeu d'une roue avant directrice (7) et comportant un premier amortisseur dit amortisseur avant (8), d'un bras oscillant (16) articulé au cadre (1), portant l'axe du moyeu (19) d'une roue arrière motrice (20) et un amortisseur (25) dont les extrémités sont solidaires respectivement du cadre (1) et du bras oscillant (16), le couple moteur étant transmis à la roue motrice (20) par une chaîne (21) s'étendant entre un pignon menant (14) solidaire du cadre et un pignon mené (22) solidaire de l'axe du moyeu (19) de la roue motrice (20), et d'au moins un capteur dit de choc (30) apte à déterminer le franchissement d'un obstacle par la roue directrice (7) et/ou motrice (20), ledit capteur (30) étant connecté à une unité de contrôle (28) pilotant l'amortisseur avant (8) et/ou arrière (25) en fonction du signal transmis par ledit capteur (30), **caractérisé en ce que** l'amortisseur avant (8) et/ou arrière (25) est un amortisseur à compression variable comportant au moins trois positions, une position ouverte dans laquelle la compression est maximale, une position fermée dans laquelle la compression est nulle et une position dite médium, et **en ce qu'**il comporte au moins des moyens de détection de pédalage dits capteurs de pédalage (29) connectés à l'unité de contrôle (28) qui, lorsqu'aucun pédalage n'est détecté par le capteur de pédalage (29), règle la commande de compression de l'amortisseur (8,25) dans la position ouverte et, lorsqu'un pédalage est détecté par le capteur de pédalage (29), règle la commande de compression de l'amortisseur (8,25) dans l'une de ses trois positions, ouverte, fermée ou médium, en fonction du signal de détection des chocs.

2. Système de suspension d'une bicyclette suivant la revendication 1, **caractérisé en ce que** l'unité de contrôle (28) règle la commande de compression de l'amortisseur (8,25) dans la position fermée lorsque, d'une part, un pédalage est détecté par le capteur de pédalage (29) et, d'autre part, aucun choc n'est détecté.

3. Système de suspension d'une bicyclette suivant l'une quelconque des revendications 1 ou 2, **caractérisé en ce que** l'unité de contrôle (28) règle la commande de compression de l'amortisseur (8,25) dans une position intermédiaire dite médium lorsque, d'une part, un pédalage est détecté par le capteur de pédalage (29) et, d'autre part, un choc est détecté par le capteur de choc (30).

4. Système de suspension d'une bicyclette suivant l'une quelconque des revendications 1 à 3, **caractérisé en ce que** l'unité de contrôle (28) règle la commande de compression de l'amortisseur (8,25) dans sa position ouverte lorsque, d'une part, un pédalage est détecté par le capteur de pédalage (29) et, d'autre part, un choc de grande intensité est détecté par le capteur de choc (30).

5. Système de suspension d'une bicyclette suivant l'une quelconque des revendications 1 à 4, **caractérisé en ce qu'**il comporte des moyens de détermination de l'énergie du choc détecté.

6. Système de suspension d'une bicyclette suivant les revendications 4 et 5, **caractérisé en ce que** l'unité de contrôle (28) règle la vitesse d'enfoncement de l'amortisseur (8,25) en fonction du niveau d'énergie du choc détecté par le capteur de choc (30).

7. Système de suspension d'une bicyclette suivant l'une quelconque des revendications 1 à 6, **caractérisé en ce que** les moyens de détection de pédalage (29) consistent en au moins une ampoule reed (31) solidaire du cadre (1) et en au moins un aimant permanent (32) solidaire d'au moins une manivelle (15) d'un boîtier de pédalier (13).

8. Système de suspension d'une bicyclette suivant l'une quelconque des revendications 1 à 6, **caractérisé en ce que** les moyens de détection du pédalage (29) consistent en au moins un capteur magnéto inductif (31) solidaire du cadre et en au moins un aimant permanent (32) solidaire d'au moins une manivelle (15) d'un boîtier de pédalier (13).

9. Système de suspension d'une bicyclette suivant l'une quelconque des revendications 1 à 6, **caractérisé en ce que** les moyens de détection du pédalage (29) consistent en des moyens de mesure de la puissance de pédalage (34) connectés à l'unité de contrôle (28) qui règle la commande de compression de l'amortisseur (8,25) en fonction de la puissance mesurée.

10. Système de suspension d'une bicyclette suivant l'une quelconque des revendications 1 à 9, **caractérisé en ce qu'**il comporte des moyens de mesure de l'inclinaison (35) de ladite bicyclette connectés à l'unité de contrôle (28) qui règle la commande de compression de l'amortisseur (8,25) en fonction de l'inclinaison mesurée.

## Claims

1. Suspension system for a bicycle of the type that comprises: a frame (1); a front fork (6) carrying the axle of the hub of a front guiding wheel (7) and comprising a first damper, ie front damper (8); a swing arm (16) hinged to the frame (1), carrying the axle of the hub (19) of a rear driving wheel (20) and a damper (25) whose ends are connected to the frame (1) and swing arm (16) respectively, the driving torque being transmitted to the driving wheel (20) by a chain (21) extending between a driving gear (14) connected to the frame and a driven gear (22) connected to the axle of the hub (19) of the driving wheel (20); and at least one shock sensor (30) capable of detecting that an obstacle is being cleared by the guiding wheel (7) and/or the driving wheel (20), said sensor (30) being connected to a monitoring unit (28) controlling the front damper (8) and/or rear damper (25) on the basis of the signal sent by said sensor (30), **characterised in that** the front damper (8) and/or rear damper (25) is a variable-compression damper that has at least three positions, an open position in which compression is greatest, a closed position in which compression is zero, and a so-called medium position, and **in that** it has, as a minimum, means for detecting pedalling called pedalling sensors (29) connected to the monitoring unit (28) which, when pedalling is not detected by the pedalling sensor (29), sets the damper (8, 25) compression command to the open position and, when pedalling is detected by the pedalling sensor (29), sets the damper (8, 25) compression command to one of its three positions, open, closed or medium, on the basis of the shock detection signal.

2. Suspension system for a bicycle according to claim 1, **characterised in that** the monitoring unit (28) sets the damper (8,25) compression command to the closed position when, on the one hand, pedalling is detected by the pedalling sensor (29) and, on the other, no shock is detected.

3. Suspension system for a bicycle according to either of claims 1 or 2, **characterised in that** the monitoring unit (28) sets the damper (8,25) compression command to an intermediate so-called medium position when, on the one hand, pedalling is detected by the pedalling sensor (29) and, on the other, a shock is detected by the shock sensor (30).

4. Suspension system for a bicycle according to any of claims 1 to 3, **characterised in that** the monitoring unit (28) sets the damper (8,25) compression command to its open position when, on the one hand, pedalling is detected by the pedalling sensor (29) and, on the other, a high-intensity shock is detected by the shock sensor (30).

5. Suspension system for a bicycle according to any of claims 1 to 4, **characterised in that** it comprises means for determining the energy of the shock detected.

6. Suspension system for a bicycle according to claims 4 and 5, **characterised in that** monitoring unit (28) sets the speed of compression of the damper (8,25) on the basis of the level of energy of the shock detected by the shock sensor (30).

7. Suspension system for a bicycle according to any of claims 1 to 6, **characterised in that** the means for detecting pedalling (29) consist of at least one Reed switch (31) connected to the frame (1) and at least one permanent magnet (32) connected to at least one crank (15) of a pedal housing (13).

8. Suspension system for a bicycle according to any of claims 1 to 6, **characterised in that** the means for detecting pedalling (29) consist of at least one magneto-inductive sensor (31) connected to the frame and at least one permanent magnet (32) connected to at least one crank (15) of a pedal housing (13).

9. Suspension system for a bicycle according to any of claims 1 to 6, **characterised in that** the means for detecting pedalling (29) consist of means for measuring the pedalling power (34) connected to the monitoring unit (28) which sets the damper (8,25) compression command on the basis of the power measured.

10. Suspension system for a bicycle according to any of claims 1 to 9, **characterised in that** it comprises means (35) for measuring the inclination of said bicycle connected to the monitoring unit (28) which sets the damper (8,25) compression command on the basis of the inclination measured.

## Patentansprüche

1. Federungssystem eines Fahrrads nach Art derjenigen mit einem als Rahmen (1) bezeichneten Gestell, einer vorderen Gabel (6), welche die Nabenachse eines gelenkten Vorderrades (7) trägt und einen als vorderen Stoßdämpfer (8) bezeichneten ersten Stoßdämpfer umfasst, einem am Rahmen (1) angelenkten Schwingarm (16), der die Nabenachse (19) eines hinteren Antriebsrades (20) und einen Stoßdämpfer (25), dessen Enden jeweils mit dem Rahmen (1) und dem Schwingarm (16) fest verbunden sind, trägt, wobei das Antriebsmoment über eine Kette (21) auf das Antriebsrad (20) übertragen wird, die sich zwischen einem Treibritzel (14), das mit dem Rahmen fest verbunden ist, und einem Abtriebsritzel (22), das mit der Nabenachse (19) des Antriebsrades (20) fest verbunden ist, erstreckt, und mindestens einem so genannten Stoßsensor (30), der geeignet ist, das Überqueren eines Hindernisses durch das gelenkte Rad (7) und/oder Antriebsrad (20) zu erkennen, wobei der besagte Sensor (30) mit einer Kontrolleinheit (28) verbunden ist, die abhängig von dem vom besagten Sensor (30) übertragenen Signal den vorderen (8) und/oder hinteren Stoßdämpfer (25) ansteuert, **dadurch gekennzeichnet, dass** der vordere (8) und/oder hintere (25) Stoßdämpfer ein Stoßdämpfer mit variabler Dämpfung mit mindestens drei Positionen ist, einer offenen Position mit maximaler Dämpfung, einer geschlossenen Position ohne Dämpfung und einer so genannten Medium-Position (mittleren Position), und dass er mindestens Einrichtungen für die Erkennung des Pedaltritts umfasst, so genannte Pedaltrittsensoren (29), die mit der Kontrolleinheit (28) verbunden sind, welche die Dämpfungssteuerung des Stoßdämpfers (8,25) in die offene Position regelt, wenn vom Pedaltrittsensor (29) kein Pedaltritt erkannt wird, und die Dämpfungssteuerung des Stoßdämpfers (8,25) abhängig vom Erkennungssignal der Stöße in eine der drei Positionen - offene, geschlossene oder mittlere Stellung - regelt, wenn vom Pedaltrittsensor (29) ein Pedaltritt erkannt wird.

2. Federungssystem eines Fahrrads nach Anspruch 1, **dadurch gekennzeichnet, dass** die Kontrolleinheit (28) die Dämpfungssteuerung des Stoßdämpfers (8,25) in die geschlossene Stellung regelt, wenn einerseits vom Pedaltrittsensor (29) ein Pedaltritt und andererseits kein Stoß erkannt wird.

3. Federungssystem eines Fahrrads nach einem der Ansprüche 1 oder 2, **dadurch gekennzeichnet, dass** die Kontrolleinheit (28) die Dämpfungssteuerung des Stoßdämpfers (8,25) in eine mittlere, so genannte Medium-Stellung regelt, wenn einerseits vom Pedaltrittsensor (29) ein Pedaltritt und andererseits vom Stoßsensor (30) ein Stoß erkannt wird.

4. Federungssystem eines Fahrrads nach einem der Ansprüche 1 - 3, **dadurch gekennzeichnet dass** die Kontrolleinheit (28) die Dämpfungssteuerung des Stoßdämpfers (8,25) in seine offene Stellung regelt, wenn einerseits vom Pedaltrittsensor (29) ein Pedaltritt und andererseits vom Stoßsensor (30) ein starker Stoß erkannt wird.

5. Federungssystem eines Fahrrads nach einem der Ansprüche 1 - 4, **dadurch gekennzeichnet, dass** es Einrichtungen für die Bestimmung der Energie des erkannten Stoßes umfasst.

6. Federungssystem eines Fahrrads nach den Ansprüchen 4 und 5, **dadurch gekennzeichnet, dass** die Kontrolleinheit (28) die Eindrückgeschwindigkeit des Stoßdämpfers (8,25) in Abhängigkeit von der Energiestärke des vom Stoßsensor (30) erkannten Stoßes regelt.

7. Federungssystem eines Fahrrads nach einem der Ansprüche 1 - 6, **dadurch gekennzeichnet, dass** die Einrichtungen für die Pedaltritterkennung (29) aus mindestens einem Reed-Kontakt (31), der mit dem Rahmen (1) fest verbunden ist, und mindestens einem Dauermagneten (32), der mit mindestens einer Kurbel (15) eines Tretkurbelgehäuses (13) fest verbunden ist, bestehen.

8. Federungssystem eines Fahrrads nach einem der Ansprüche 1 - 6, **dadurch gekennzeichnet, dass** die Einrichtungen für die Pedaltritterkennung (29) aus mindestens einem magnetinduktiven Sensor (31), der mit dem Rahmen (1) fest verbunden ist, und mindestens einem Dauermagneten (32), der mit mindestens einer Kurbel (15) eines Tretkurbelgehäuses (13) fest verbunden ist, bestehen.

9. Federungssystem eines Fahrrads nach einem der Ansprüche 1 - 6, **dadurch gekennzeichnet, dass** die Einrichtungen für die Pedaltritterkennung (29) aus Messeinrichtungen der Pedaltrittleistung (34) bestehen, die mit der Kontrolleinheit (28) verbunden sind, welche die Dämpfungssteuerung des Stoßdämpfers (8,25) in Abhängigkeit von der gemessenen Leistung regelt.

10. Federungssystem eines Fahrrads nach einem der Ansprüche 1 - 9, **dadurch gekennzeichnet, dass** es Einrichtungen für die Messung der Neigung (35) des besagten Fahrrads umfasst, die mit der Kontrolleinheit (28) verbunden sind, welche die Dämpfungssteuerung des Stoßdämpfers (8,25) in Abhängigkeit von der gemessenen Neigung regelt.
